# EUROPÄISCHE PATENTSCHRIFT

(11) **EP 0 350 706 B1**
(45) Veröffentlichungstag und Bekanntmachung des Hinweises auf die Patenterteilung: **13.04.1994**
(21) Anmeldenummer: 89111651.9
(22) Anmeldetag: 27.06.1989
(51) Int. Cl.: B01D 53/34, B01D 53/36

(54) **Verfahren zur Minderung von Stickoxiden (NOx) aus Feuerungsabgasen**
Process for reducing nitrogen oxides in combustion gases
Procédé pour réduire les oxydes d'azote des gaz de combustion

(30) Priorität: 12.07.1988 DE 3823575
(43) Veröffentlichungstag der Anmeldung: 17.01.1990
(73) Patentinhaber: Apparatebau Rothemühle Brandt & Kritzler Gesellschaft mit beschränkter Haftung, 57482 Wenden-Rothemühle (DE)
(72) Erfinder:
(74) Vertreter: Müller, Gerd, Dipl.-Ing.

(56) Entgegenhaltungen:
- EP-A- 0 115 707
- EP-A- 0 145 920
- WO-A-82/01931
- CH-A- 312 089
- DE-A- 3 335 917
- FR-A- 2 296 812
- US-A- 3 832 122

## Beschreibung

Die Erfindung betrifft ein Verfahren zur Verbrennung fossiler Brennstoffe, mit den der im Ofen-Rauchgas enthaltene Anteil an Stickoxiden (NOₓ) beträchtlich verringert wird und eine Vorrichtung zur Durchführung des Verfahrens in einer Kraftwerks- und/oder Industriefeuerungsanlage oder dergleichen, wobei dem Wärmeerzeuger oder Dampferzeuger für die katalytische Oxidation ein Katalysator nachgeschaltet ist.

Zur Emissionsminderung von Stickoxiden (NOₓ) in den Abgasen von Kraftwerks- und Industriefeuerungen können feuerungstechnische Maßnahmen -Primärmaßnahmen- oder Abgasreinigungsmaßnahmen -Sekundärmaßnahmen- getroffen werden, wie sie beispielsweise aus "technische Mitteilungen" 80. Jahrgang, Heft 9, Nov./Dez. 1987 S.566-572 hervorgehen. Die feuerungstechnischen bzw. primären Maßnahmen zur Stickoxid-Emissionsminderung finden jedoch derzeit dort ihre Grenzen, wo das Entstehen anderer unerwünschter Schadgaskomponenten, insbesondere Kohlenmonoxid und Kohlenwasserstoff, in verstärktem Maße einsetzt.

Aus diesem Grunde wird bei den Kraftwerks- und Industriefeuerungen derzeit eine Stickoxid-Emissionsminderung regelmäßig durch NOₓ-Abgasreinigung, also durch Sekundärmaßnahmen, vorgenommen, wie beispielsweise der DE-A-33 35 917, der DE-A-34 06 657 und der DE-A 34 31 061 entnommen werden kann.

Bei der Stickstoffoxid-Emissionsminderung durch NOₓ-Ahgasreinigung werden die Kraftwerks- und Industriefeuerungen so betrieben, daß es ihnen mit dem Abgas Schadgaskomponenten, wie insbesondere Kohlenmonoxid und Kohlenwasserstoffe, nur in geringstmöglichen Mengenanteilen abgeführt werden, und zwar unabhängig von den sich darin bildenden Mengenanteilen von Stickstoffoxiden, die sich dabei aus Verbrennungs-Stickstoffoxiden (thermischen NOₓ) und Brennstoff-Stickstoffoxiden (Brennstoff NOₓ) zusammensetzen.

Zur Emissionsminderung des relativ hohen Anteils von Stickoxiden (NOₓ) in den die Kraftwerks- und Industriefeuerungen verlassenden Abgasen, werden diese dann zur selektiven katalytischen Reduktion (SCR-Verfahren) durch bzw. über Katalysatoren geführt. Mit Hilfe dieser Katalysatoren werden die Stickstoffoxide unter Zugabe von Ammoniak zu Stickstoff und Wasser umgesetzt und damit aus den Abgasen entfernt bzw. abgeschieden. Je nach Auslegung der Katalysatoren können dabei NOₓ-Umsätze von 70-90 % erreicht werden. In jedem Falle erfordern jedoch die Katalysatoren eine Arbeitstemperatur von 300°C, wobei sie optimal nur bei Abgastemperaturen oberhalb 350°C arbeiten.

Ein gattungsgemäßes Verfahren ist aus der FR-A-22 96 817 bekannt, bei der durch eine mehrstufige Verbrennung bei reduzierter Luftzufuhr die NOₓ-Bildung vermieden bzw. die NOₓ-Bildung reduziert werden soll. Die zweite Verbrennungsstufe wird mit einem zwischengeschalteten Katalysator im Temperaturbereich zwischen 925 bis 1760°C, vorzugsweise bei 1095 bis 1650°C betrieben und zwar mit der Zielsetzung, daß sich weder CO noch NOₓ bilden kann. Diese bekannte Verfahrensart ist nach den feuerungstechnischen bzw. primären Maßnahmen zur Stickoxid-Emissionsminderung zuzuordnen. Bei der katalytischen Verfahrensstufe handelt es sich um eine zweite, lediglich "katalytisch unterstützte" thermische Verbrennungsstufe. In einem solchen Fall muß der Katalysator in einem Temperaturbereich betrieben werden, welcher wesentlich oberhalb einer 800°C-Grenze, nämlich über der momentanen Selbstentzündungstemperatur des ihm zugeführten Gasgemisches liegt. Daraus folgt, daß auch die vor dem Katalysator stattfindende Verbrennungsstufe in einem Temperaturbereich stattfinden muß, der wesentlich oberhalb von 800°C liegt. Die Problematik dieser Hochtemperaturverbrennung liegt darin, daß es zur zusätzlich Bildung von Oxiden des Stickstoffs kommt.

Die Erfindung zielt nun darauf ab, eine Verfahrensart zur weitgehenden Minderung von Stickstoffoxiden (NOₓ) aus Feuerungsabgasen bei der Verbrennung fossiler Brennstoffe anzugeben, mit der innerhalb eines Temperaturbereichs der Abgase zwischen 200°C und 800°C optimal gearbeitet werden kann und welche sich daher noch wirksam einsetzen läßt, wenn die Arbeitsweise der bekannten Verfahren bereits unzuverlässig wird oder sogar schon unwirksam ist.

Erreicht wird dieses Ziel erfindungsgemäß dadurch, daß in einer ersten Stufe der Brennstoff ein abgestufte pyrolisierende Verbrennung durchläuft, bei der bei niedriger Verbrennungstemperatur bis zu 800°C der verfügbare Sauerstoffanteil in der Reaktionszone unter die stöchometrische Menge sowie die Verweildauer im Verbrennungsbereich unter Bedingungen verlängert wird, die es ermöglichen, daß sich der Anteil an entstandenen Stickoxiden beträchtlich verringert, und daß dann die dabei entstehenden erhöhten Anteile reaktiver Rauchgas-Komponenten, wie Kohlenmonoxid (CO) und Kohlenwasserstoff (CH) in einer zweiten Stufe die katalytische Oxidation bei einer Temperatur von 200°C bis 800°C - ggfs. unter Beimischung von Zusatzluft - durchlaufen, wobei die Stickoxide (NOₓ) ohne Zusetzen eines besonderen Reduktionsmittels durch katalytische Reduktion eliminiert werden, bevor die Abgase oder Rauchgase in die Atmosphäre abgeführt werden.

Es hat sich gezeigt, daß nach dieser Verfahrensart der Vorgang der pyrolisierenden Verbrennung zur ausschließlichen NOₓ-Minderung genutzt und dabei ohne komplizierte einschreckende Randbedingungen betrieben werden kann, während die katalytische Nachreaktion nahezu ausschließlich auf die reaktiven Abgaskomponenten (Kohlenmonoxid, Kohlenwasserstoffe usw.) einwirkt, die sich auch in einem niedrigen Temperaturbereich von nur 200°C noch katalytisch oxidieren und damit aus den Abgasen entfernen lassen.

Vorteilhaft bei der erfindungsgemäßen Verfahrensart ist auch, daß sie sich in Großfeuerungsanlagen ohne Abgasrückführung einsetzen läßt, so daß nicht nur der Anlagenaufwand vermindert werden kann, sondern auch Betriebsprobleme, die besonders bei Teillastbetrieb entstehen können, vermeidbar sind.

Nach der erfindungsgemäßen Verfahrensart lassen sich also die unerwünschten, gasförmigen Schadstoffe noch bei verhältnismäßig niedriger Temperatur abbauen, wobei die dabei ggfs. freiwerdende Reaktionswärme in der Wärmeerzeugungsanlage, bspw. zur Vorwärmung der Verbrennungsluft, wieder genutzt werden kann.

Bei der Vorrichtung zur Durchführung des Verfahrens in einer Kraftwerks- und/oder Industriefeuerungsanlage oder dergleichen ist dem Wärmeerzeuger oder Dampferzeuger für die katalytische Oxidation ein Katalysator nachgeschaltet, wobei der Katalysator in einem Temperaturbereich der Abgase zwischen 800°C und 200°C liegt und zumindest teilweise in den Luftvorwärmer/Ekonomizer der Kraftwerks- und/oder Industriefeuerungsanlage integriert wird.

Die Integration des Katalysators hat den Vorteil, daß die Heizflächen sich katalytisch wirksam ausführen lassen, woraus dann ein verminderter Druckabfall der Abgase resultiert. Zudem unterliegt der erfindungsgemäße Anlagenaufbau weniger hohen thermischen und mechanischen Anforderungen und kann damit wirtschaftlicher gestaltet werden.

Anhand der Zeichnung wird nachfolgend die Erfindung erläutert. Es zeigt:
- Figur 1: in schematisch vereinfachter Darstellung einen Wärmeerzeuger mit in der Abgasleitung nachgeschaltetem Katalysator und
- Figur 2: ebenfalls in schematisch vereinfachter Darstellung einen Dampferzeuger mit in der Abgasleitung nachgeschaltetem Katalysator.

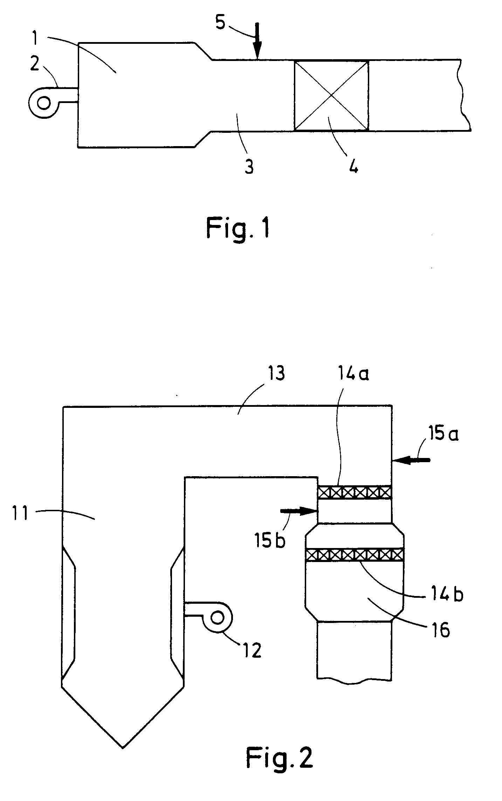

In Figur 1 der Zeichnung ist ein Wärmeerzeuger 1 gezeigt, der mit Brennern 2 zur Verfeuerung von Gas, Öl oder Kohle betrieben werden kann.

Die Feuerungsabgase des Wärmeerzeugers 1 werden durch eine Abgasleitung 3 abgeführt, in der ein Katalysator 4 angeordnet ist und in die vor dem Katalysator 4 durch Zuleitungen 5 Luft oder Sauerstoff eingedüst werden kann.

Der Wärmeerzeuger 1 wird mit sogenannter pyrolisierender Verbrennung betrieben, die eine thermische Zersetzung chemischer Verbindungen bewirkt.

Die Brennstoffe werden also durch entsprechende feuerungstechnische Maßnahmen - primär - unter Aufrechterhaltung einer niedrigen Verbrennungstemperatur - bis zu 800°C - mit vermindertem Sauerstoffangebot in der Reaktionszone - unterstöchiometrisch - sowie mit verlängerten Verweilzeiten - langsam - verfeuert.

Durch diesen Vorgang der pyrolisierten Verbrennung ist gewährleistet, daß die Stickstoffoxide (NOₓ), gleichgültig ob es sich um Verbrennungs-Stickstoffoxide - thermisches NOₓ -oder um Brennstoff-Stickstoffoxide - Brennstoff-NOₓ - handelt, bereits im Bereich der Feuerung weitestgehend unschädlich gemacht werden.

Bei dieser pyrolisierenden Verbrennung entstehen jedoch in erhöhtem Maße unerwünschte, reaktive Abgaskomponenten, insbesondere Kohlenmonoxid und Kohlenwasserstoffe, die vielfach wegen mangelnder Arbeitstemperatur nicht mehr abgebaut werden können.

Damit aber diese reaktiven Abgaskomponenten nicht ins Freie gelangen können, werden die Abgase aus dem Wärmeerzeuger über den Katalysator 4 geführt. An bzw. in diesem findet innerhalb eines Temperaturbereichs zwischen 800°C und 200°C - also noch bei relativ niedrigen Temperaturen - eine Oxidation statt, die gegebenenfalls durch Beimischung von Zusatzluft durch die Leitung 5 intensiviert wird und dadurch die Schadgase eliminiert, bevor das Abgas ins Freie gelangt.

Der Katalysator 4 muß dabei natürlich so ausgelegt werden, daß er hauptsächlich die im Abgasstrom verbleibenden Schadgase, wie Kohlenmonoxid (CO) und Kohlenwasserstoffe (CH), oxidiert. Katalysatoren,die Platin und Rhodium oder aber Platin und Palladium enthalten, sind für diese Zwecke besonders geeignet.

Der Katalysator 4 kann aber auch eine solche Auslegung erhalten, daß er neben der katalytischen Oxidation der Schadgase, z.B. Kohlenmonoxid (CO) und Kohlenwasserstoffe (CH), eine zusätzliche katalytische Reduktion der in den Abgasen noch enthaltenen Restmenge von Stickoxiden (NOₓ) bewirkt.

In Fig. 2 der Zeichnung ist ein Dampferzeuger 11 zu sehen, der über Brenner 12 für Gas, Öl oder Kohle befeuert wird. Die hierbei entstehenden Abgase werden der Abgasleitung 13 zugeführt, in welche ein Luftvorwärmer 16 bzw. ein Economiser eingebaut ist.

Der Fig. 2 kann entnommen werden, daß sich ein Katalysator 14a mit Abstand vor dem Luftvorwärmer 16 bzw. Economiser in die Abgasleitung 13 einbauen läßt. Es besteht darüber hinaus aber auch die Möglichkeit, einen Katalysator 14b in Waben-, Platten- oder auch Füllkörperbauweise in den Luftvorwärmer 16 zu integrieren, indem dessen Heizflächen bzw. Speichermassen mit Katalysator-Werkstoff beschichtet werden.

Durch die Integration des Katalysators 14b in den Luftvorwärmer 16 läßt sich ein zusätzlicher Druckabfall der Abgase vermindern.

Die katalytische Oxidation der Schadgase, z.B. Kohlenmonoxid (CO) und Kohlenwasserstoff (CH), läßt sich auch hier verbessern, wenn vor dem Katalysator 14a durch die Leitung 15a oder vor dem Katalysator 14b durch die Leitung 15b Luft oder Sauerstoff in die Abgasleitung 13 eingedüst wird.

In allen Fällen, also sowohl beim Betrieb des Wärmeerzeugers 1 nach Fig. 1 als auch beim Betrieb des Dampferzeugers 11 nach Fig. 2 kann der Betrieb ohne eine Rauchgasrückführung stattfinden, so daß der Anlagenaufwand entsprechend verringert wird. Auch die aus einer Rauchgasrückführung resultierenden Betriebsprobleme, die besonders bei Teillast-Betrieb der Feuerung auftreten können, werden also sicher vermieden.

Durch die vorstehend beschriebene Entfernung von reaktiven Schadgasen, wie Kohlenmonoxid (CO) und Kohlenwasserstoffe (CH) mittels Nachreaktion, nämlich katalytischer Oxidation aus den Abgasen kann der Vorgang der pyrolisierenden Verbrennung zwecks Minderung der Stickstoffoxide (NOₓ) optimiert werden, weil er keinerlei komplizierten und einschränkenden Randbedingungen mehr unterliegt, welche feuerungstechnisch üblicherweise zur Vermeidung unerwünschter Schadgasentstehung eingehalten werden müssen.

## Patentansprüche

1. Verfahren zur Verbrennung fossiler Brennstoffe, mit dem der im Ofen-Rauchgas enthaltene Anteil an Stickoxiden (NOₓ) beträchtlich verringert wird,
**dadurch gekennzeichnet,**
daß in einer ersten Stufe der Brennstoff eine abgestufte pyrolisierende Verbrennung durchläuft, bei der bei niedriger Verbrennungstemperatur bis zu 800 °C der verfügbare Sauerstoffanteil in der Reaktionszone unter die stöchiometrische Menge verringert sowie die Verweildauer im Verbrennungsbereich unter Bedingungen verlängert wird, die es ermöglichen, daß sich der Anteil an entstandenen Stickoxiden beträchtlich verringert, und daß dann die dabei entstehenden erhöhten Anteile reaktiver Rauchgas-Komponenten, wie Kohlenmonoxid (CO) und Kohlenwasserstoff (CH) in einer zweiten Stufe die katalytische Oxidation bei einer Temperatur von 200 °C bis 800 °C - gegebenenfalls unter Beimischung von Zusatzluft - durchlaufen, wobei die Stickoxide (NOₓ) ohne Zusetzen eines besonderen Reduktionsmittels durch katalytische Reduktion eliminiert werden, bevor die Abgase oder Rauchgase in die Atmosphäre abgeführt werden.

2. Vorrichtung zur Durchführung des Verfahrens nach Anspruch 1 in einer Kraftwerks- und/oder Industriefeuerungsanlage, wobei dem Wärmeerzeuger oder Dampferzeuger für die katalytische Oxidation ein Katalysator nachgeschaltet ist,
**dadurch gekennzeichnet,**
daß der Katalysator in einem Temperaturbereich der Abgase zwischen 800°C und 200°C liegt und zumindest teilweise in den Luftvorwärmer/Ekonomizer der Kraftwerks- und/oder Industriefeuerungsanlage integriert ist.

## Claims

1. A process for the combustion of fossil fuels, with which the amount of nitrogen oxides (NOₓ) contained in the furnace flue gas is considerably reduced,
**characterised in that** in a first stage the fuel undergoes gradual pyrolysing combustion, in which at a low combustion temperature of up to 800°C the available oxygen content in the reaction zone is reduced beneath the stoichiometric amount and also the sojourn time in the combustion region is extended under conditions which enable the amount of nitrogen oxides produced to be considerably reduced,
**and in that** in a second stage the increased amounts of reactive flue gas constituents produced as a result, such as carbon monoxide (CO) and hydrocarbon (CH), undergo catalytic oxidation at a temperature of 200 °C to 800 °C - if necessary with the admixture of additional air, in which case the nitrogen oxides (NOₓ) are eliminated without the addition of a special reduction agent by catalytic reduction, before the exhaust gases or flue gases are discharged into the atmosphere.

2. A device for performing the process according to Claim 1 in a power station furnace and/or industrial furnace, whereby a catalytic converter is installed after the heat generator or steam generator for the catalytic oxidation, characterised in that the catalytic converter lies in a temperature range of the exhaust gases of between 800° and 200°C and is integrated at least partially in the air preheater/economizer of the power station furnace and/or industrial furnace.

## Revendications

1. Procédé pour la combustion de combustibles fossiles, permettant de réduire notablement la fraction d'oxydes d'azote (NOₓ) des gaz de fumée du four,
caractérisé en ce que, dans une première étape, on soumet le combustible à une combustion pyrolisante parétapes, dans laquelle on diminue la fraction d'oxygène disponible dans la zone de réaction à température de combustion peu élevée jusqu'à 800° C, en dessous de la quantité stoechiométrique, et dans laquelle on augmente le temps de séjour dans la zone de combustion dans des conditions qui permettent de réduire notablement la fraction d'oxydes d'azote générés, et en ce qu'on soumet ensuite dans un deuxième étape, les fractions accrues ainsi obtenues de constituants réactifs des gaz de fumée, comme le monoxyde de carbone et l' hydrocarbure (CH), à une oxydation catalytique, à une température de 200° C à 800° C, éventuellement sous addition d'air supplémentaire, les oxydes d'azote (NOx) étant éliminés sans addition d'un agent réducteur particulier par réduction catalytique, avant que les gaz résiduaires ou gaz de fumée soient évacués à l'atmosphère.

2. Dispositif pour la mise en oeuvre du procédé de la revendication 1 dans une installation de combustion industrielle de centrale électrique, un catalyseur étant agencé à la suite du générateur de chaleur ou de vapeur, pour l'oxydation catalytique,
caractérisé en ce que le catalyseur est agencé dans une zone de température des gaz résiduaires comprise entre 800° C et 200° C et est intégré au moins partiellement dans le préchauffeur d'air/économiseur de l'installation de combustion industrielle et/ou de centrale électrique.
